# EUROPEAN PATENT APPLICATION

(11) **EP 4 840 836 A1**
(43) Date of publication of application: **18.11.2026**
(21) Application number: 25176038.5
(22) Date of filing: 13.05.2025
(51) Int. Cl.: C04B 28/14, C04B 40/00, C04B 41/47, C04B 103/65

(54) **MONTAN WAX FREE EMULSION FOR PLASTERBOARDS**

(71) Applicant: Hansen & Rosenthal GmbH & Co. KG, 20457 Hamburg (DE)
(72) Inventor: VAN KESSEL, Kevin, 6361 HB Nuth (NL); IN DE BRAEKT, Maud, 6361 HB Nuth (NL)
(74) Representative: Bardehle Pagenberg Partnerschaft mbB Patentanwälte Rechtsanwälte

(57) **Abstract**

The present invention relates to a water repellent composition, wherein the water repellent composition is an emulsion or dispersion comprising at least one oil component or at least one wax component or a mixture thereof; at least one polymer dispersing agent; and water. The water-repellent composition may be used to prepare plasterboard. Not only is the water-repellent composition according to the invention an emulsion that is completely Montan wax free and Carnauba wax free but it also offers better performances in plasterboard. Better performances means improved water repellency, while spreadability is not negatively affected.

## Description

The present invention relates to a water repellent composition, wherein the water repellent composition is an emulsion comprising at least one oil component or at least one wax component or a mixture thereof; at least one polymer dispersing agent; and water.

Wax dispersions have been used in plasterboard for many years. An essential ingredient in many conventional hydrocarbon wax dispersions is Montan wax. Montan wax (CAS No 8002-53-7), which is also known in the art as lignite wax, is a hard, brittle, naturally occurring wax that is typically brown-black in color. However, the availability has become poor and consequently the price has risen dramatically.

The conventional hydrocarbon wax dispersions containing Montan wax as essential ingredient are used for plasterboard based on synthetic gypsum and are less effective when combined with natural sourced gypsums, i.e. it has less water repellency.

US 5,437,722 A discloses conventional hydrocarbon wax dispersions containing Montan wax and polyvinyl alcohol. The wax emulsion are easy to process and show good performance in gypsum slurries and gypsum wallboard.

From US 2017/0029332 A1 a wax emulsion for the manufacture of wallboard is known. The wax emulsion includes a lignosulfonic acid or a salt thereof and at least one wax, which can be Montan wax, and a stabilizer.

### Description of the invention

Object of the invention is a water repellent composition according to claim 1. Further embodiments are subject matter of the dependent claims or described below.

Object of the present invention is a water repellent composition, wherein the water repellent composition is an aqueous emulsion or an aqueous dispersion comprising
at least one oil component or at least one wax component or a mixture thereof;
at least one polymer dispersing agent; and
water,
characterized in that the at least one polymer dispersing agent is a styrene (meth)acrylic co- polymer, the at least one oil component is a biobased oil, preferably a vegetable oil, the at least one wax component is a hydrocarbon wax (fossil based), and the composition contains no Montan wax, i.e. is free of Montan wax, and no Carnauba wax. The water-repellent composition according to the invention does not contain Montan wax and/or Carnauba wax, preferably it does not contain Montan wax and Carnauba wax.

As used herein, the expression "styrene (meth)acrylic copolymer" refers to copolymers which predominantly comprise copolymerized styrene and acrylic acid and/or methacrylic acid monomers or other acrylate monomers. "Copolymer" refers to a polymer composed of several different (usually two) basic units (monomers). "Acrylates" are polymers or copolymers based on acrylic acid and/or other alkyl acrylates (acrylic acid esters), while methacrylates are polymers or copolymers based on methacrylic acid and/or its esters.

As used herein, the expression "water repellent" means treated with a composition that is resistant but not impervious to penetration by water.

As used herein, the expression "bio based" refers to substances defined as "bio-based under EU law. According to the EU Commission, bio-based substances consist entirely or partially of materials of biological origin, whereby materials embedded in geological formations or fossilized ("fossil") are excluded. According to DIN EN 16575, biomass is a "material of biological origin with the exception of material embedded in geological formations and / or transformed into fossil material". ASTM D6866-12 "Standard Test Methods for Determining the Biobased Content of Solid, Liquid, and Gaseous Samples Using Radiocarbon Analysis." is a suitable method for evaluating materials that are biobased and produced from renewable raw materials. A measurement of 0% 14C relative to the corresponding standard indicates that the carbon comes entirely from fossil sources (e.g. petroleum). A measurement of 100% 14C in relation to the corresponding standard means that the carbon comes entirely from new, biogenic sources.

As used herein, the expression "aqueous emulsion" refers to an oil-in-water emulsion. An emulsion is a heterogeneous system consisting of two immiscible liquid phases in which one is intimately distributed in the other as minute droplets whose diameters exceed 0.1 micrometer. In most cases, one of the liquids is water. The second liquid is usually an oil. When oil is dispersed as extremely fine droplets in a continuous phase of water, the emulsion is referred to as an oil-in-water emulsion. When oil is the continuous phase, the emulsion is known as a water-in-oil emulsion.

As used herein, the expression "aqueous dispersion" refers to a heterogeneous system in which fine particles of a solid are dispersed within water as the continuous phase, the solid in water is especially a solidified wax in water. The dispersed phase typically ranges in size from nanometers to micrometers.

The water repellent composition according to the invention can either be an aqueous emulsion which is liquid to liquid, namely oil in water or an aqueous dispersion, which is solid to liquid, namely solidified wax in water.

As used herein, the expression "paraffin slack wax" refers to a wax that wax is the raw material of paraffin wax production. Slack Wax is one of the by-products of a dewaxing process in the refinery of crude oil, which removes the waxy components from crude oil. Paraffin slack wax is a yellow or brown material and has a high viscosity. Slack wax and paraffin wax are two different types of wax.

As used herein, the expression "biobased" refers to biobased substances according to the definition of the EU Commission. According to the EU commission bio-based substances consist wholly or partly of materials of biological origin, whereby materials embedded in geological formations or fossilized ("fossil") are excluded. The biobased material according to DIN EN 16575 is a "material of biological origin with the exception of material embedded in geological formations and / or transformed into fossil material".

The water-repellent composition according to the invention can be an aqueous emulsion. Preferably a monomodal distribution is obtained, a mean particle size (D[4.3]) of the particles in the aqueous emulsion can for example be smaller than 700 nm determined using a laser diffraction analyzer.

According to a first embodiment of this invention the water-repellent composition comprises the at least one oil component or at least one wax component or the mixture thereof in an amount of 30 - 60 wt. - % of the total emulsion, preferably 35 - 57 wt.- %.

The water-repellent composition may comprise at least one biobased oil and the biobased oil is preferably a vegetable oil selected from coconut oil, palm oil, palm kernel oil, soy bean oil, sunflower oil, rapeseed oil, castor oil, partially hydrogenated palm oil, fully hydrogenated palm, oil, fully hydrogenated palm kernel oil, fully hydrogenated coconut oil, fully hydrogenated rapeseed oil, and mixtures thereof, most preferably selected from fully hydrogenated palm kernel oil.

If the water-repellent composition comprises at least one biobased oil, the oil is preferably present in an amount of 30 - 60 wt. - % of the total emulsion, preferably 35 - 57 wt..- %.

If the water-repellent composition comprises at least one hydrocarbon wax the wax is preferably selected from the group consisting of paraffin slack wax, refined paraffin wax, Fisher Tropsch wax, oxidized Fisher Tropsch wax, polyethylene wax, oxidized polyethylene wax, maleated polyethylene wax, and mixtures thereof.

The at least one hydrocarbon wax is preferably present in the water-repellent composition in an amount of 30 - 60 wt. - % of the total emulsion, preferably 35 - 57 wt.- %.

The polymer dispersion agent may be a styrene (meth)acrylic copolymer selected from the group styrene acylic acid copolymers, styrene methacrylic acid copolymers, styrene acrylonitrile acrylic acid copolymers, styrene butylacrylate acrylic acid copolymers and (partially) esterified derivatives thereof. The polymer dispersion agent may also a synthetic binder, preferably a styrenebutadiene polymer or an alkyd resin or a mixture thereof with a styrene (meth)acrylic copolymer.

The water-repellent composition may further comprise one or more additives. The additive may be a neutralizing agent. Preferably the neutralizing agent is preferably selected from potassium hydroxide (KOH), sodium hydroxide (NaOH), ammonium hydroxide (NH₄OH), , triethanolamine (TEA) and diethanolamine (DEA)

The aqueous emulsion or aqueous dispersion may further include other additives, including without limitation emulsifiers and stabilizers, flame retardants, preserving agents, fungicides, insecticides, biocides, and/or sizing agents. Such additives are preferably present in minor amounts and are provided in amounts which will not materially affect the resulting composite board properties. Preferably no more than 15% by weight, more preferably no more than 10%, and most preferably no more than 5% by weight of such additives are present in the aqueous emulsion or aqueous dispersion.

The water-repellent composition may comprise

| | |
|---|---|
| 30 to 60 wt.-% | of at least one oil component and/or of at least one wax component, |
| 1 to 10 wt.-% | of at least one polymer dispersing agent and water, |

based on the total weight of composition.

The water-repellent composition preferably comprises

| | |
|---|---|
| 30 to 60 wt.-% | of at least one oil component and/or of at least one wax component, selected from the group consisting of from coconut oil, palm oil, palm kernel oil, soy bean oil, sunflower oil, rapeseed oil, castor oil, partially hydrogenated palm oil , fully hydrogenated palm, oil, fully hydrogenated palm kernel oil, fully hydrogenated coconut oil, fully hydrogenated rapeseed oil, paraffin slack wax, refined paraffin wax, Fisher Tropsch wax, oxidized Fisher Tropsch wax, polyethylene wax, oxidized polyethylene wax, maleated polyethylene wax, and mixtures thereof, |
| 1 to 10 wt.-% | of at least one polymer dispersing agent selected from the group styrene acylic acid copolymers, styrene methacrylic acid copolymers, styrene acrylonitrile acrylic acid copolymers, styrene butylacrylate acrylic acid copolymers and partially esterified derivatives thereof and water (ad 100 %), |

based on the total weight of the composition.

In a preferred embodiment the water-repellent composition comprises

| | |
|---|---|
| 35 to 55 wt.-% | coconut oil, palm oil, palm kernel oil, soy bean oil, sunflower oil, rapeseed oil, castor oil, partially hydrogenated palm oil , fully hydrogenated palm, oil, fully hydrogenated palm kernel oil, fully hydrogenated coconut oil, fully hydrogenated rapeseed oil, paraffin slack wax, refined paraffin wax, Fisher Tropsch wax, oxidized Fisher Tropsch wax, polyethylene wax, oxidized polyethylene wax, maleated polyethylene wax, or a mixture thereof, |
| 2 to 6 wt.-% | styrene methacrylic acid copolymers, styrene acrylonitrile acrylic acid copolymers, styrene butylacrylate acrylic acid copolymers and partially esterified derivatives thereof and water (ad 100 %) |

based on the total weight of the composition.

The solids content of the aqueous emulsion/aqueous dispersion may be about 35% to about 65% by weight of the emulsion, or about 30% to about 60% measured with an infrared moisture analyzer. Water is preferably provided to the emulsion in amounts of about 30% to about 60% by weight of the emulsion, or about 35% to about 65% by weight of the emulsion.

The water-repellent composition may have a pH value above 7.5, preferably above 8, most preferably between 8 and 9

Surprisingly the water-repellent composition according to the invention has excellent characteristics when used for plasterboard and exceeds the performance of conventional wax-containing emulsions. The water repellent composition gives excellent results and can be used for both, synthetic and natural gypsum. It also has excellent characteristics not found in conventional wax emulsions.

The water-repellent composition according to the invention contains a polymer of the group of styrene acrylic copolymers. This polymer has a double function: After neutralizing the polymer acts as dispersing agent to disperse the hydrocarbon waxes and/or biobased oils in water and it serves as a retention agent to retain the hydrocarbon wax and/ or vegetable oils to the substrate.

When mixed, for instance with gypsum, the water-repellent composition may work according to two different mechanism, physical and chemical. Physical, the dispersion fills the pores of gypsum and during dehydration the polymer polymerizes into a thin film where it retains the hydrocarbon wax and/ or the vegetable oil. Other mechanism between organic and inorganic materials may occur as well, hydrogen bonding and van der Waals interactions.

When the dispersion contains active groups is may undergo binding through a chemical mechanism, the carboxylate group of the polymer may adhere to the Ca²⁺ of the gypsum formed during the hydration step. After dehydration it forms a network with the surface of the gypsum, where it retains the hydrocarbon wax and/ or biobased oil.

The water repellent composition according to the invention may be prepared using the following steps:
- providing solid resins of styrene acrylic as a solid resin,
- adding the solid resin to water at temperatures between 30 - 60, preferably 40-50 °C, under stirring. The mixture is stirred to guarantee complete wetting of the solid resin,
- after complete wetting adding a neutralizing agent such as a base under further stirring and heated to a minimum temperature of 80°C. Thus, the resin is neutralized with the base, e.g. potassium hydroxide in water, which results in a salt, e.g. a potassium salt of styrene acrylate.
- Continue mixing until the solid resin is completely dissolved and the mixture has a pH value of at least 8.2.
- Adding the molten hydrocarbon wax and/ or biobased oil and further mixing with a high shear mixer; and
- Homogenizing the obtained pre-emulsion with a high pressure homogenizer.

For the preparation of test samples, such as prisms, the emulsion may be shock-cooled at temperatures below 35°C.

The solids content (% dry matter) of the obtained emulsion/ dispersion can vary from 5 up to 95%.

Alternatively, already prepared polymer latexes (liquid form) can be used instead of the solid resin in water. For example, a polymer latex may be heated to a minimum temperature of 80°C. Hereafter molten hydrocarbon wax and/or biobased oil is added. The obtained pre-emulsion is further processed as described above into a uniform emulsion or dispersion.

Another object of the invention is the use of a water repellent composition according to claims 1 to 10 or described above as an additive or finish for plasterboards, wooden substrates, concrete curing or paper sizing, preferably for gypsum plasterboards.

The water-repellent composition is preferably used in the production of plasterboard. The water-repellent composition is also applicable for wooden substrates, such as e.g. wood based panels, concrete curing and paper sizing, including internal and surface sizing.

Further additives may be added to the slurry during the production of plasterboards. Suitable additives are for example water reducing agents, retardants or accelerators. Retardants can be added to extend the setting time of the plaster slurry. Accelerators can be added to reduce the set time of the plaster slurry. Water reducing agents can be added to reduce the amount of water required to maintain a gypsum slurry with the correct flow properties, thus affecting energy in the drying phases.

The water-repellent composition may be used to prepare plasterboard. The manufacture of plasterboard is a continuous process. Gypsum is dried and then a liquid suspension of stucco, water, wax emulsion and other additives is quickly prepared. The slurry is pumped onto a paper line and then a second paper feed overlays the plaster slurry. The plaster hardens within a few minutes as it runs horizontally along a continuous line. Boards are cut from the solid plaster and then passed through ovens with controlled temperature profiles to remove the excess of water. Dried boards are then accurately cut to size and stacked on pallets. The water-repellent composition according to the invention can be used in the same manufacturing process instead of a wax emulsion with Montan wax without any modifications of the production process.

Not only is the water-repellent composition according to the invention an emulsion that is completely Montan wax free and Carnauba wax free but it also offers better performances in plasterboard. Better performances means improved water repellency, while spreadability is not negatively affected. These emulsions according to the invention offer excellent total water absorption values that are many times better than that of the tested conventional wax emulsions.

The water-repellent composition shows a good total water absorption with fossil-based hydrocarbon wax as well as with bio-based oil. It is also possible to reduce the dosage of the water-repellent composition up to 20% compared to the conventional wax emulsion, while keeping the good values for the total water absorption and the spreadability.

The water-repellent composition according to the invention can be shock-frosted to get prisms/pieces. The pieces/prisms made with emulsions containing styrene acrylics are up to 4.5% lighter compared to the prisms/pieces made with conventional wax emulsions. This means that a lot of air is entrapped in the prisms/cupcakes and foam has been created. This has an advantage, as this could mean the plasterboard manufacturer do not need to add an extra foaming agent.

In addition, the water-repellent compositions also have a retarding effect during the production of plasterboards, which means that retarders do not have to be added to the plaster slurry to extend the curing time of the plaster slurry.

The water-repellent composition shows an excellent storage stability which is comparable to that of conventional wax emulsions.

### Examples

This invention will now be described, by way of illustration only, with reference to the following examples. The examples should not be construed as limiting the generality of the above description.

### Preparation of water repellent composition

Several compositions were prepared according to tables 1 and 3. Solid resins of the styrene acrylic copolymers were used. The solid resin was added to water of 40-50°C and stirred for several minutes to guarantee complete wetting of the solid resin. After complete wetting potassium hydroxide was added as a neutralizing agent and the mixture was further stirred and heated to a minimum temperature of 80°C. The mixing was continued until the solid resin was completely dissolved and the pH has been adjusted to at least 8.2. The molten hydrocarbon wax and/ or the biobased oil was added to this mixture and further mixed with a high shear mixer. The obtained pre-emulsion was homogenized with a high pressure homogenizer and shock cooled to <35°C. The solids content (% dry matter) of the obtained emulsion/ dispersion was measure.

**Table 1: Composition of water repellent compositions; Examples 1 to 6 are according to the invention; Comp. Ex. 1 is a comparative example**

| **Raw material** | **Comp. Ex. 1** | **Ex.1** | **Ex.2** | **Ex.3** | **Ex.4** | **Ex.5** | **Ex.6** | **Ex.7** |
|---|---|---|---|---|---|---|---|---|
| **Paraffin wax** | 33,94 | | 35,2 | 45,2 | | | | |
| **Carnauba wax** | 3 | | | | | | | |
| **Hydrogenated palm kernel oil** | | 35,2 | | | 55,23 | 36,09 | 35,8 | 35,44 |
| **PVOH** | 2 | | | | | | | |
| **Sodium lignosulfonate** | 0,4 | | | | | | | |
| **KOH 50%** | 0,4 | 1,8 | 1,8 | 1,8 | 1,8 | 1,05 | 1,34 | 1,7 |
| **Styrene acrylate copolymer type 1^{#1}** | | 4 | 4 | 4 | 4 | 1 | 2 | 3 |
| **Styrene acrylate copolymer type 3^{#2}** | | | | | | 3 | 2 | 1 |
| **Reaction mass of: 5-chloro-2-methyl-4-iso-thiazolin-3-one and 2-methyl-2H-isothiazol-3-one ^{#3}** | | 0,1 | 0,1 | 0,1 | 0,1 | 0,1 | 0,1 | 0,1 |
| **Water** | 60,26 | 58,9 | 58,9 | 48,9 | 38,87 | 58,76 | 58,76 | 58,76 |

| | | | | | | | | |
|---|---|---|---|---|---|---|---|---|
| *#1: Indurez*^{®}SR10 PGSP produced by INDULOR Chemie GmbH *#2: JONCRYL*^{®}586 produced by BASF *#3: Acticide*^{®}MVproduced by THOR GmbH | | | | | | | | |

Spreadability has been measured using a bottomless ring according to the following method: 'Method description to determine spreadability'.

A slurry was produced using the following ratios stucco : water : emulsion, respectively 1 : 0.70 : 0.05. A bottomless ring was placed on a glass plate and the slurry was poured into the ring until the ring was completely filled. The slurry was leveled off. The ring containing the slurry mixture was quickly lifted, the slurry formed a kind of ring/plate. The larger the ring/plate diameter, the higher the fluidity. The average diameter of the circle of slurry formed on the glass plate was measured (in cm).

The total water adsorption was determined using the method described in DIN EN 520:2004 and A1:2009.

**Table 2: Settings used for making the gypsum mixtures, the hydration/drying process and the follow-up analysis.**

| **Parameter** | **Settings** |
|---|---|
| **Saturation time** | 15 seconds |
| **Mixing time** | 30 seconds |
| **Hardening time (RT - outside the oven)** | 30 minutes |
| **Oven temperature + drying time** | 1. 3 hours at 80°C |
| | 2. 24 hours at 40 °C |
| **Conditioning oven** | 23 °C and 50% relative humidity to constant mass |
| **Water bath** | 2/24 hours at 23 °C |

**Table 3: Ratios used with a normal dosage and a lower dosage.**

| **Ratios** | **Stucco** | **Water** | **Emulsion** |
|---|---|---|---|
| (1) | (2) | (3) | (4) |
| *Blanc* | 1 | 0.75 | - |
| *Normal dosage* | 1 | 0.70 | 0.05 |
| *Lower Dosage (-20%)* | 1 | 0.71 | 0.04 |
| *Lower Dosage (-40%)* | 1 | 0.72 | 0.03 |
| *Lower Dosage (-60%)* | 1 | 0.73 | 0.02 |

**Table 4: Properties of exemplary water-repellent compositions of table 1**

| **Properties** | **Comp. Ex. 2** | **Ex.1** | **Ex.2** | **Ex.3** | **Ex.4** | **Ex.5** | **Ex.6** | **Ex.7** |
|---|---|---|---|---|---|---|---|---|
| **Dyn. Visco** | <250 | <150 | <150 | <150 | <250 | <150 | <150 | <150 |
| **Solids** | 38-42 | 38-42 | 38-42 | 48 - 52 | 58-62 | 38-42 | 38-42 | 38-42 |
| **pH** | ~12 | -8.3 | -8.3 | -8.3 | -8.3 | -9.0 | -9.0 | -9.0 |

**Table 5: Ingredients and properties of exemplary compositions**

| **Description** | **Ex. 1** | **Ex. 7** | **Ex. 8** | **Ex. 9** | **Ex. 10** | **Ex. 11** | **Ex. 12** | **Ex. 13** | **Ex. 14** | **Ex. 15** | **Ex. 16** | **Ex. 17** | **Ex. 18** | **Ex. 19** | **Ex. 20** |
|---|---|---|---|---|---|---|---|---|---|---|---|---|---|---|---|
| | | | | | | | | | | | | | | | |
| - | % | % | % | % | % | % | % | % | % | % | % | % | % | % | % |
| palmkernel - MP40 °*C* | 35,2 | 38,13 | 32,33 | | | | 35,3 | | | | 34,83 | | | | |
| palm - *MP37* °*C* | | | | | | | | | | | | | 35,23 | 36,09 | 35,8 |
| palm - MP45 °*C* | | | | | | | | | | | | 35,23 | | | |
| palm - MP58 °*C* | | | | | 35,23 | | | | | | | | | | |
| *coconut -MP32* °*C* | | | | 35,23 | | | | | | | | | | | |
| rapeseed/cocos - MP47 °*C* | | | | | | 35,3 | | | | | | | | | |
| Rapeseed *oil* | | | | | | | | | | 35,23 | | | | | |
| Partially hydrogenated rapeseed *oil,* MP43 °*C* | | | | | | | | 35,3 | | | | | | | |
| Partially hydrogenated rapeseed *oil, MP52°C* | | | | | | | | | 35,23 | | | | | | |
| KOH | 1,8 | 0,9 | 2,7 | 1,8 | 1,8 | 1,8 | 2,25 | 1,8 | 1,8 | 1,8 | | 1,8 | 1,8 | 1,05 | 1,34 |
| *Ammonia* | | | | | | | | | | | 2,7 | | | | |
| styrene acrylate *(type 1)* | 4 | 2 | 6 | 4 | 4 | 4 | | 4 | 4 | 4 | 4 | 4 | 4 | 1 | 2 |
| styrene acrylate *(type 2)* | | | | | | | 4 | | | | | | | | |
| styrene acrylate *(type 3)* | | | | | | | | | | | | | | 3 | 2 |
| *Reaction mass of:* 5-chloro-2-me*thyl-4-iso-thiazolin-3-one* and 2-*methyl-2H-isothiazol-3-one* | 0,1 | 0,1 | 0,1 | 0,1 | 0,1 | 0,1 | 0,1 | 0,1 | 0,1 | 0,1 | 0,1 | 0,1 | 0,1 | 0,1 | 0,1 |
| *Water* | 58,9 | 58,87 | 58,87 | 58,87 | 58,87 | 58,8 | 58,8 | 58,8 | 58,87 | 58,87 | 58,37 | 58,87 | 58,87 | 58,76 | 58,76 |
| | | | | | | | | | | | | | | | |
| Dyn. Visco | <150 | <150 | <150 | <150 | <150 | <150 | <150 | <150 | <150 | <150 | <150 | <150 | <150 | <150 | <150 |
| Solids | 38-42 | 38-42 | 38-42 | 38-42 | 38-42 | 38-42 | 38-42 | 38-42 | 38-42 | 38-42 | 38-42 | 38-42 | 38-42 | 38-42 | 38-42 |
| pH | ~8.3 | ~8.3 | ~8.3 | ~8.3 | ~8.3 | ~8.3 | ~8.3 | ~8.3 | ~8.3 | ~8.3 | ~8.3 | ~8.3 | ~8.3 | ~9.0 | ~9.0 |

Several examples were prepared with less or more addition of the styrene acrylic copolymer, use of different plant sources and a different grade of styrene acrylic. All formulations have been kept the same to make them a good comparison with example 1. The total water absorption (TWA) of all the emulsions made with fully hydrogenated palmkernel show good and comparable results, the same applies for the emulsion made with fully hydrogenated coconut oil/ rapeseed oil.

For the examples one emulsion according to example 2 was made with a fossil-based wax. The other emulsions were made with a biobased oil. As a comparative example 1 an emulsion was prepared with a conventional wax emulsion that is state of the art VIVALITE 70.

Both the fossil-based emulsion as well as the biobased oil emulsions showed good results after 2 h water absorption, where it meets the set limit of <5%. Approximately 3% water absorption after 2 hours for the fossil-based emulsion (example 2) and approximately 1% water absorption after 2 hours for the bio-based emulsions (example 1). If compared with the comparative example 1, this difference is significant. Comparative example 1 showed a water absorption of 26.22% water after 2 hours.

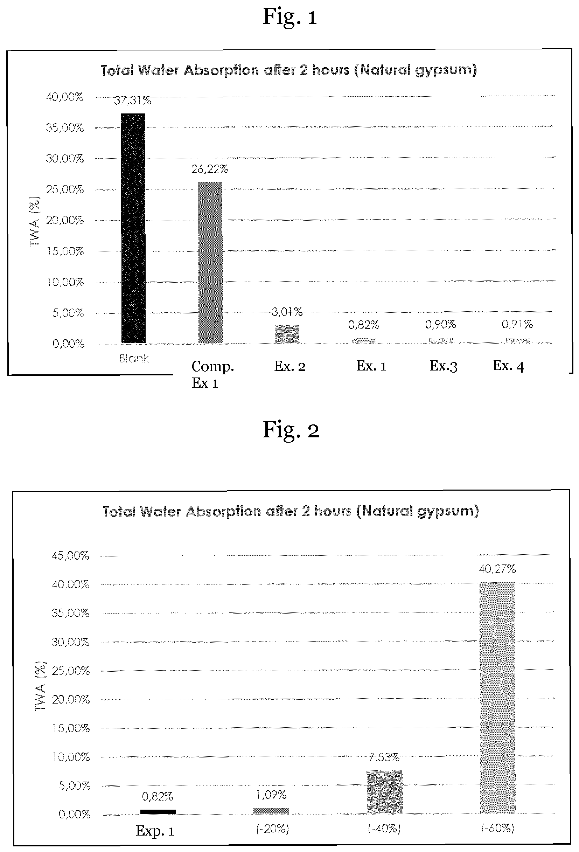

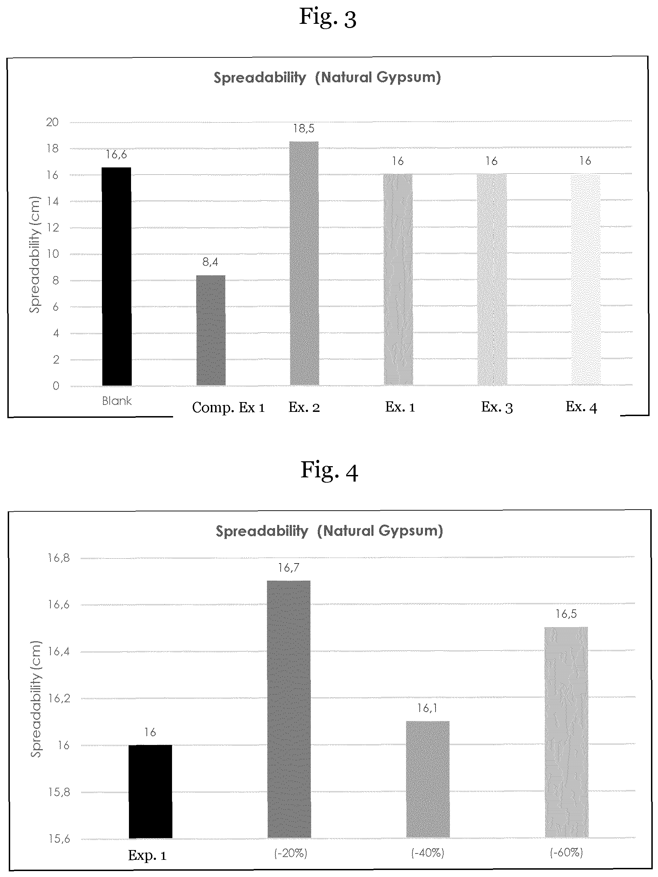

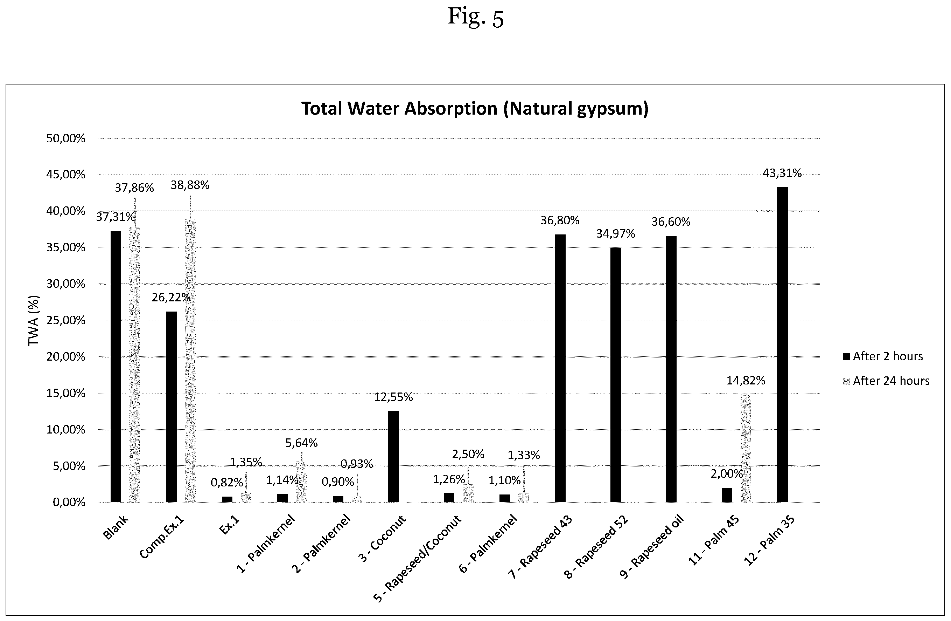

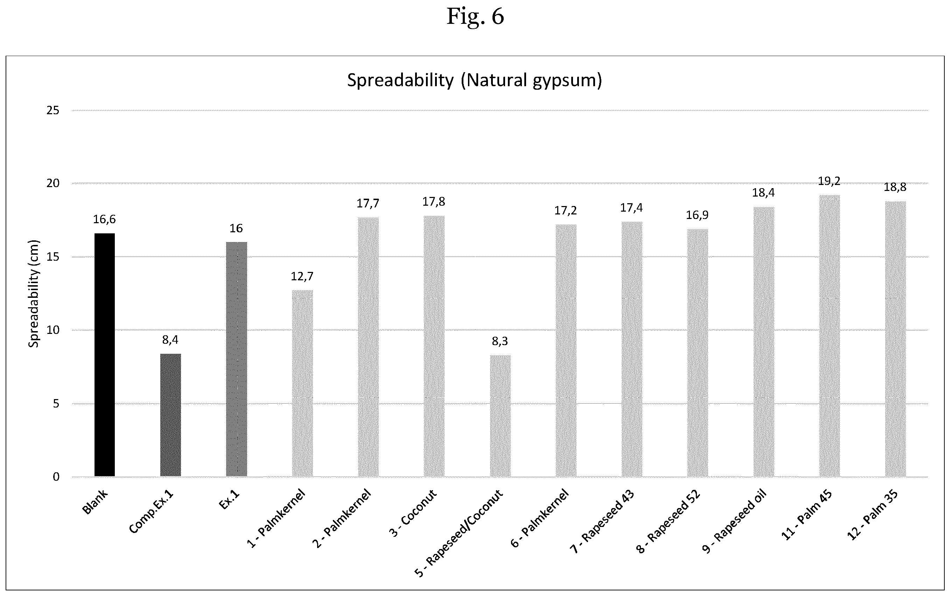

The Total Water Absorption results and the spreadability from the emulsions above are shown in figures 1 and 2. Additionally, a lower dosage of Example 1 was also examined: -20% ; -40% and -60% compared to the normal dosage (figures 3 and 4).

The emulsions that gave very good performances are example 2 (fossil-based) and example 1 (bio-based). Example 2 gave a total water absorption of 3.01% after 2 hours with a spreadability of 18.5 cm. Example 2 gave a total water absorption of 0.82% after 2 hours with a spreadability of 16 cm. It is possible to reduce the dosage of example 1 up to 20%, after 2 hours the total water absorption was 1.09% with a spreadability of 16.7 cm

The spreadability of the plaster slurry was also examined. The results of the emulsions according to the invention (~16 cm) were better than that of the comparative example (8.4 cm), particularly up to 2 times better. The fossil-based emulsion has a slightly better spreadability than the bio-based emulsions, namely 18.5 cm compared to 16 cm.

To determine whether the dosage could be lowered, a serie was made in which 20%, 40% and 60% less emulsion was added to the plaster compared to the normal dosage, for this study we used the composition of example 1. It could be seen that the total water absorption results obtained with 20% less emulsion were still comparable to a normal dosage (1.09%). Surprisingly, with 20% less dosage the spreadability remained the same as the normal dosage of example 1.

Examples 7 and 8 used a lower and higher dosage of styrene acrylate (2% and 6%), both gave the same results after 2 hours water absorption. However, after 24 hours it can be seen that the water absorption values of the emulsion with 6% styrene acrylate are even better than the initial composition of example 1 with 4% styrene acrylate.

As a final step, the spreadability of the emulsions gets worse if less styrene acrylic is added. If more is added, the spreadability improves. The two emulsions (examples 12 and 17) showed even better spreadability than example 1.

Modifications and variations such as would be apparent to a skilled addressee are deemed to be within the scope of this invention. It is also understood that the scope of this invention should not be limited to the examples illustrated above.

## Claims

1. A water repellent composition, wherein the water repellent composition is an aqueous emulsion or an aqueous dispersion comprising
at least one oil component or at least one wax component or a mixture thereof;
at least one polymer dispersing agent; and
water,
**characterized in that** the at least one polymer dispersing agent is a styrene (meth)acrylic copolymer, the at least one oil component is a biobased oil, the at least one wax component is a hydrocarbon wax, and the composition contains no Montan wax, which means it is free of Montan wax.

2. A water-repellent composition according to claim 1, **characterized in that** the water-repellent composition comprises at least one biobased oil and the biobased oil is selected from coconut oil, palm oil, palm kernel oil, soy bean oil, sunflower oil, rapeseed oil, castor oil, partially hydrogenated palm oil , fully hydrogenated palm, oil, fully hydrogenated palm kernel oil, fully hydrogenated coconut oil, fully hydrogenated rapeseed oil, and mixtures thereof.

3. A water-repellent composition according to anyone of the preceding claims, **characterized in that** the at least one hydrocarbon wax is selected from the group consisting of paraffin slack wax, refined paraffin wax, Fisher Tropsch wax, oxidized Fisher Tropsch wax, polyethylene wax, oxidized polyethylene wax, maleated polyethylene wax, and mixtures thereof.

4. A water-repellent composition according to anyone of the preceding claims, **characterized in that** the polymer dispersion agent is a styrene (meth)acrylic copolymer selected from the group styrene acylic acid copolymers, styrene methacrylic acid copolymers, styrene acrylonitrile acrylic acid copolymers, styrene butylacrylate acrylic acid copolymers and partially esterified derivatives thereof.

5. A water-repellent composition according to anyone of the preceding claims, **characterized in that** the water-repellent composition further comprises at least one neutralizing agent and the neutralizing agent is preferably selected from potassium hydroxide (KOH), sodium hydroxide (NaOH), ammonium hydroxide (NH₄OH), triethanolamine(TEA) and diethanolamine (DEA).

6. A water-repellent composition according to anyone of the preceding claims, **characterized in that** the water-repellent composition comprises at least one biobased oil and the biobased oil is present in an amount of 30 - 60 wt. - % of the total emulsion, preferably 35 - 57 wt .- %.

7. A water-repellent composition according to anyone of the preceding claims, **characterized in that** the water-repellent composition comprises
30 to 60 wt.-% of at least one oil component and/or of at least one wax component,
1 to 10 wt.-% of at least one polymer dispersing agent and
water (ad 100 %).

8. A water-repellent composition according to claim 7, **characterized in that** the water-repellent composition comprises
| | |
|---|---|
| 30 to 60 wt.-% | of at least one oil component and/or of at least one wax component, selected from the group consisting of from coconut oil, palm oil, palm kernel oil, soy bean oil, sunflower oil, rapeseed oil, castor oil, partially hydrogenated palm oil , fully hydrogenated palm, oil, fully hydrogenated palm kernel oil, fully hydrogenated coconut oil, fully hydrogenated rapeseed oil, paraffin slack wax, refined paraffin wax, Fisher Tropsch wax, oxidized Fisher Tropsch wax, polyethylene wax, oxidized polyethylene wax, maleated polyethylene wax, and mixtures thereof, |
| 1 to 10 wt.-% | of at least one polymer dispersing agent selected from the group styrene acylic acid copolymers, styrene methacrylic acid copolymers, styrene acrylonitrile acrylic acid copolymers, styrene butylacrylate acrylic acid copolymers and partially esterified derivatives thereof and |
water (ad 100 %).

9. A water-repellent composition according to anyone of the preceding claims, **characterized in that** the solids content of the aqueous emulsion or aqueous dispersion is about 35% to about 65% by weight of the emulsion, or about 30% to about 60%.

10. A composition according to anyone of the preceding claims, **characterized in that** the composition has a pH value above 7.5.

11. Use of a water-repellent composition according to any one of the claims 1 to 10 as an additive or finish for plasterboards, wooden substrates, concrete curing or paper sizing, preferably for gypsum plasterboards.
